# EUROPÄISCHE PATENTANMELDUNG

(11) **EP 0 623 547 A1**
(43) Veröffentlichungstag der Anmeldung: **09.11.1994**
(21) Anmeldenummer: 94106239.0
(22) Anmeldetag: 21.04.1994
(51) Int. Cl.: B66B 9/20, E04G 21/16, B60P 3/00, B60P 1/54

(54) **Verfahrbares Arbeits- und Transportsystem**

(30) Priorität: 21.04.1993 DE 4313045
(71) Anmelder: Matula, Franz, D-81735 München (DE)
(72) Erfinder: Matula, Franz, D-81735 München (DE)

(57) **Zusammenfassung**

Eine fahrbare Schienenstraße 2 mit einer auf dem Fahrgestell 4 aufruhenden, im wesentlichen horizontalen Wagenlaufbahn 16 zeichnet sich dadurch aus, daß die Schienenstraße 2 ein Paket aus mehreren ineinander verschiebbar angeordneten Gleiselementen 18 - 24 aufweist, von denen das jeweils äußere Gleiselement nach seinem Ausfahren mit Hilfe seiner aufgelenkten Stützbeine 32 in horizontaler Lage gehalten wird.

Durch das Ausfahren der Gleiselemte 14, 18 - 24 wird eine Schienenstraße 2 über dem Erdboden ähnlich einer Brücke bis zum gewünschten Ort vorgeschoben. Die Schienenstraße 2 gestattet die Zufahrt eines Wagens mit entsprechendem Werkzeug zum Zielort und den Abtransport von Fördergut aus dem Zielort.

Die betreffende Schienenstraße 2 ist leicht an jeden beliebigen Ort manövrierbar und kann dazu noch eine in gewissen Grenzen beliebige Länge erhalten, ohne dadurch ihre Stabilität in Frage zu stellen.

## Beschreibung

Die Erfindung betrifft ein verfahrbares Arbeits- und Transportsystem gemäß Gattungsbegriff des Anspruches 1.

Ein bekanntes Transportsystem der vorstehend beschriebenen Art (FR-PS 1476 844) weist einen Transportwagen auf, an dessen Längskanten Profilschienen starr befestigt sind, in denen eine Art Portalrahmen verfahrbar ist. Der Portalrahmen besitzt einen seitlich ausfahrbaren Ausleger mit seitlichen Stützen. Ein vom Portalrahmen auf den Ausleger verfahrbares Hebezeug soll dazu dienen, um das Fahrzeug mit schweren Gütern vereinfacht beladen und entladen zu können.

Dieses bekannte Transportsystem hat wie jedes Fahrzeug einen üblichen Platzbedarf, der nicht überall vorhanden ist, um nahe genug an die zu transportierenden Güter heranzukommen. Dies gilt beispielsweise für den Abtransport von Bauschutt aus Hinterhöfen mit einer für Lastkraftwagen unzureichenden Zufahrt, für den Abtransport von Grabaushuben in Friedhöfen oder auch für den Abtransport von Gütern aus einem unwegsamen Gelände. Mit den herkömmlichen Transportsystemen läßt sich der Abtransport von Gütern aus schwer zugänglichen Orten nur mit einem erheblichen Aufwand durchführen, da zunächst das zu transportierende Gut in kleinen Mengen zu einem größeren Transportgerät gebracht werden muß.

Es ist daher die der Erfindung zugrunde liegende Aufgabe, ein Transportsystem zu schaffen, das auch große Mengen von abzutransportierendem Gut auch aus schwer zugänglichen Bereichen einfach, rasch und ohne Belastung der betreffenden Personen entfernen kann.

Diese Aufgabe wird gemäß der Erfindung durch die Merkmale des kennzeichnenden Teils des Anspruches 1 gelöst.

Mit Hilfe des erfindungsgemäßen Transportsystemes ist es durch das Ausfahren der einzelnen Gleiselemente möglich, von jedem leicht zugänglichen Ort aus eine über dem Erdboden verlaufende Brücke in jeden unzugänglichen Winkel vorzuschieben. Die Brücke läßt sich in kürzester Zeit aufbauen und bildet eine auf Stützen stehende Schienenstraße, auf der ein Wagen mit einem Hebe- oder Bearbeitungswerkzeug bis an den benötigten Ort verfahren werden kann.

Dies ist besonders vorteilhaft bei Arbeiten in Friedhöfen, wie beispielsweise beim Ausheben von Gräbern. Nach den bisherigen Transportmöglichkeiten wird entweder auf den Abtransport des Grabaushubes verzichtet und eine Beschädigung von Anpflanzungen der Nachbargräber in Kauf genommen oder es ist bei Benutzung herkömmlicher Transportsysteme eine Beschädigung der Anfahrtswege und eine Beeinträchtigung durch nicht vorhersehbare Ereignisse zu befürchten.

Bei Einsatz der erfindungsgemäßen Vorrichtung kann die Schienenstraße beispielsweise von außerhalb der Friedhofsmauer über die Gräber hinweg zum benötigten Arbeitsplatz vorgeschoben werden, worauf die erforderlichen Arbeitsgerätschaften vor Ort gebracht und der abzutransportierende Aushub über die Schienenstraße, beispielsweise mit einem Förderband auf einem vor der Friedhofsmauer wartenden Lastwagen, geladen werden. Das erfindungsgemäße Transportsystem gestattet soweit nicht nur einen belästigungsfreien, sondern darüberhinaus auch einen einfachen, raschen und insbesondere billigen An- und Abtransport von Werkzeugen und Fördergut in oder aus empfindlichen Bereichen.

Besondere Ausgestaltungsformen des erfindungsgemäßen Transportsystems gehen aus den Unteransprüchen hervor.

Im nachstehenden wird ein Ausführungsbeispiel der Erfindung anhand von Zeichnungen weiter erläutert. In den Zeichnungen zeigen:
- Fig. 1: eine etwas schematisierte Gesamtansicht der betreffenden Schienenstraße,

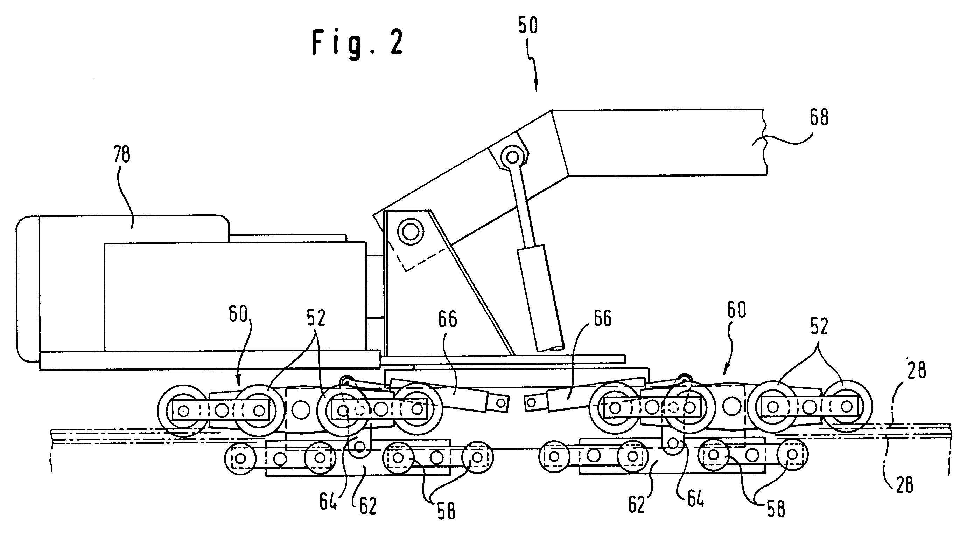

- Fig. 2:: den betreffenden Kran (Ausleger abgebrochen) in größerem Maßstab,

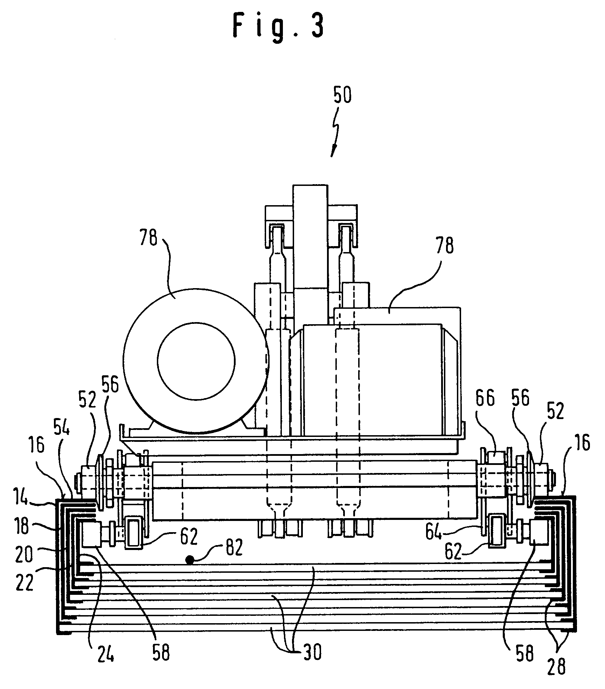

- Fig. 3:: einen Querschnitt durch die eingefahrene Schienenstraße etwa entlang der Linie III-III von Fig. 1 samt aufsitzendem Kran,

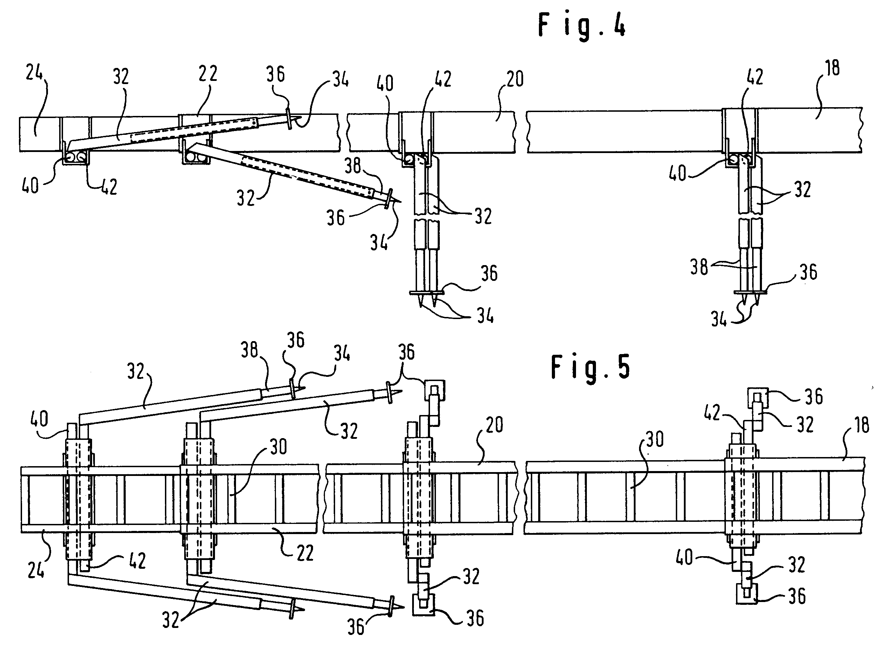

- Fig. 4:: einen Abschnitt der ausgefahrenen Schienenstraße, samt zum Teil ausgeschwenkten Standbeinen in Seitenansicht und
- Fig. 5:: den gleichen Abschnitt der Schienenstraße in Draufsicht.

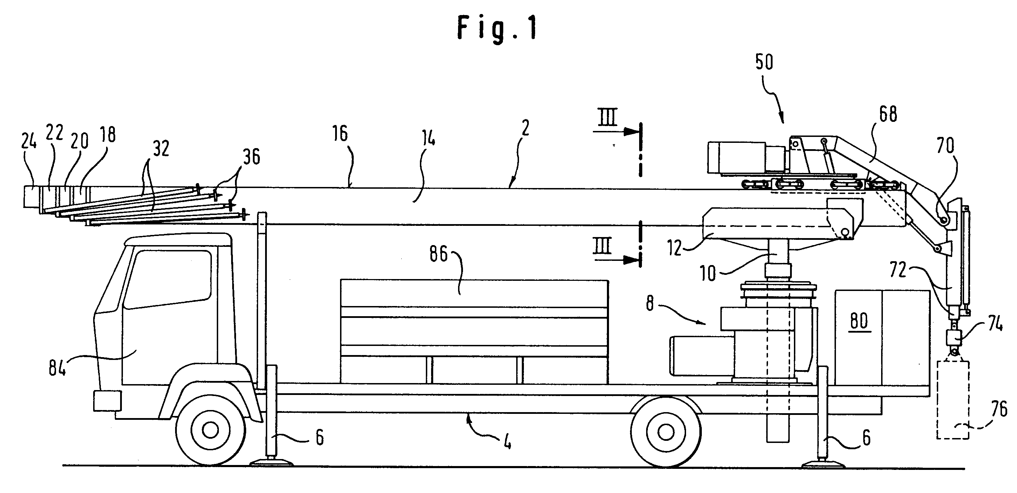

Die in Fig. 1 gesamtheitlich dargestellte Schienenstraße 2 weist ein Fahrgestell 4 in Gestalt eines weitgehend normalen Lkw-Fahrgestells auf, das jedoch zu seiner Abstützung und Nivellierung in von Autokränen her bekannter Weise vier seitwärts wie auch senkrecht - vorzugsweise hydraulisch - ausfahrbare Stützbeine 6 aufweist.

Auf dem hinteren Teil des Fahrgestelles 4 ist ein Trägeraggregat 8 mit einer vorzugsweise hydraulisch - ausfahrbaren und um ihre Achse drehbaren Säule - 10 angeordnet, die einen plattformartigen Rahmen 12 trägt. In dem Rahmen 12 ist ein erstes Gleis-Element 14 mit einer Laufbahn 16 gelagert, in dem wiederum weitere Gleis-Elemente 18 - 24 der Wagenlaufbahn 16 paketweise ausziehbar sind.

Die Gleiselemente 14 und 18 - 24 bestehen vorzugsweise aus Leichtmetall und weisen zu beiden Seiten U-förmige Winkelprofile 28 auf, die im Bereich ihres unteren Schenkels mittels Querstreben 30 miteinander verbunden sind. In der Nähe ihrer auswärtigen Enden sind an den Gleis-Elementen 14 und 18 - 24 jeweils paarweise nach unten hin ausschwenkbare Stützbeine 32 gelagert, deren mit geeigneten Standorganen, wie z.B. Spitzen 34 und Tellern 36, versehene Füße 38 nach Art derer etwa eines Fotostativs ausziehbar und in ihrer jeweiligen Ausziehstellung arretierbar sind. Darüber hinaus sind die Stützbeine 32 in bezug auf die Längsmittelebene der Wagenlaufbahn 16 mehr oder weniger weit seitwärts ausziehbar, wozu die paarweisen Stützbeine jeweils gegeneinander versetzte separate Achsen 40 bzw. 42 aufweisen.

Die so weit beschriebene Laufbahn 16 trägt einen Auslegerkran 50, der mit Laufrädern 52 auf dem oberen Schenkel 54 der jeweils freiliegenden Winkelprofile 28 läuft. Die Laufräder 52 weisen einen Spurkranz 56 auf. Im Inneren der Winkelprofile 28 stehen den Laufrädern 52 Stützrollen 58 des Kranlaufwerks 60 gegenüber, die gruppenweise auf Schwingen 62 gelagert und über Lenkhebel 64 von Hydraulikzylindern 66 in Richtung auf die Laufräder 52 zustellbar, d.h. von unten an den oberen Schenkel 54 des jeweils unterseitig gerade freiliegenden Winkelprofils 28 anpreßbar sind, um ein Ausheben des Kranes 50 zu verhindern. Indessen ist der Kran auf der Laufbahn 16 mittels Seilzugs verfahrbar, ebenso wie die Gleis-Elemente 18 - 24 der Laufbahn 16 mittels Seilzugs aus- und auch einziehbar sind.

An die Stelle der Hydraulikzylinder 66 könnten auch Pneumatikzylinder treten, oder die seitens der Zylinder aufgebrachte Kraft könnte auf andere Weise, etwa mechanisch, abgefedert sein, um die Stützräder 58 stets spielfrei mit dem jeweils darüberliegenden Schenkel 54 in Kontakt zu halten.

Der Kran 50 ist gegenüber dem Laufwerk 60 drehbar und besitzt einen auf- und abschwenkbaren Ausleger 68, der überdies um eine horizontale Achse 70 abknickbar ist. Zudem ist der außerhalb der Achse 70 liegende Auslegerabschnitt 72 teleskopartig ausfahrbar. Insoweit ist der Kranausleger 68 einem Roboterarm vergleichbar. Auch befindet sich an seinem freien Ende eine etwa nach Art einer Roboterhand drehbare und um eine querverlaufende Achse schwenkbare Aufhängevorrichtung 74 für die aufzunehmende Last, wie z.B. ein Arbeitsgerät 76 etwa in Gestalt einer Erdfräse, das i.ü. mit der Aufhängevorrichtung dauerhaft verbunden bleiben kann. Zu diesem Zweck sind die Antriebe des Kranes in wiederum von Robotern bekannter Weise neutralisierbar ("limb mode"). Im übrigen aber sind diese Antriebe hydraulischer Art und werden ggf. mitsamt dem an der Aufhängevorrichtung 74 aufgehängten Arbeitsgerät 76 von einem dem Kran 50 eigenen Hydraulikaggregat 78 gespeist, das seinerseits elektrisch angetrieben ist und von einer auf dem Fahrgestell 4 für die Schienenstraße 2 angeordneten Stromversorgung 80 über ein der Schienenstraße 2 entlanglaufendes Schleppkabel 82 gespeist wird. Die Steuerung des Kranes 50 wie die des daran aufgehängten Arbeitsgeräts 76 kann vom Boden aus mittels Fernsteuerung, etwa eine wohlbekannte Kabel-Fernsteuerung, erfolgen, welche die betreffende Bedienungsperson mit sich trägt.

Zur geordneten Unterbringung von am Einsatzort der vorausgehend beschriebenen Schienenstraße 2 ständig benötigten Gerätschaften ist das Schienenstraßen-Fahrgestell 4 im Bereich zwischen der Fahrerkabine 84 und dem Trägeraggregat 8 mit entsprechenden Aufnahmemitteln wie z.B. 86 ausgerüstet, wie dies zum Teil in ähnlicher Form etwa auch bei Feuerwehr-Gerätefahrzeugen der Fall ist.

## Patentansprüche

1. Verfahrbares Arbeits- und Transportsystem mit einer zwei parallele Laufbahnen 16 aufweisenden, Schienenstraße 2 und einem auf der Schienenstraße 2 mit Spurkranz-Laufrädern 56, 52 rollenden Wagen, auf dem ein Hebezeug oder Arbeitsgerät angeordnet ist, dadurch ***gekennzeichnet,*** daß
die Schienenstraße 2 eine Vielzahl von kastenartig aufgebauten, die parallelen Laufbahnen 16 enthaltenden Gleiselementen 14, 18 - 24 besitzt, die unter abnehmender Größe ineinander verschiebbar angeordnet sind, von denen das größere kastenartige Gleiselement 14 die jeweils kleineren kastenartigen Gleiselemente 18 - 24 paketartig umschließt und das jeweils größere kastenartige Gleiselement 14 beim Aus- und Einfahren der Schienenstraße 2 die jeweils kleineren Gleiselemente 18 - 24 wie in einem Paket mitnimmt und jedes Gleiselement 14, 18 - 24 an seinem freien Ende nach unten ausschwenkbare, höhenverstellbare Stützbeine 32 aufweist, und daß der Wagen in einen Ober- und Unterwagen unterteilt ist, von denen der Oberwagen 60 die auf den parallelen Laufbahnen 16 abrollenden Spurkranz-Laufräder 56, 52 aufweist und der Unterwagen am Oberwagen 60 in vertikaler Richtung verstellbar geführt und mit einer bestimmten Kraft gegen den Oberwagen 60 vorgespannt ist, und daß der Unterwagen mit Stützrädern 58 versehen ist, welche die Laufbahnen 16 der Schienenstraße 2 untergreifen und zusammen mit den Spurkranz-Laufrädern 56, 52 des Oberwagens 60 die Laufbahnen 16 der Schienenstraße 2 zur Verhinderung eines seitlichen Abkippens des Wagens von der Schienenstraße 2 bei Auftreten einer seitlich angreifenden Last in Klemmeingriff halten.

2. Arbeits- und Transportsystem nach Anspruch 1, dadurch ***gekennzeichnet,*** daß ein Gleiselement 14 zwei in parallelem Abstand verlaufende U-Profile 28 aufweist, deren Stege 30 in einer Vertikalebene liegen und deren die Laufbahnen 16 bildenden Schenke einander zugekehrt sind, deren vertikal tiefer liegende Schenkel durch in regelmäßigem Abstand wiederkehrende Querstreben 30 miteinander verbunden sind, und daß die U-Profile 28 und die Querstreben 30 eines Gleiselementes 14, 18 - 24 einen oben offenen, kastenartigen Körper bilden, in den ein gleichartig gestaltetes Gleiselement 18 - 24 mit etwas kleineren Abmessungen einschiebbar ist.

3. Arbeits- und Transportsystem nach einem der Ansprüche 1 bis 2, dadurch ***gekennzeichnet,*** daß die an den freien Enden der Gleiselemente 14, 18 - 24 schwenkbar angeordneten Stützbeine 32 mindestens paarweise an den gegenüberliegenden Längsseiten eines Gleiselementes 14, 18 - 24 vorgesehen sind und quer zur Längsrichtung der Schienenstraße 2 unabhängig voneinander verschiebbar sind.

4. Arbeits- und Transportsystem nach einem der Ansprüche 1 bis 3, dadurch ***gekennzeichnet,*** daß die an den freien Enden der Gleiselemente 14, 18 - 24 schwenkbar angeordneten Stützbeine 32 auf zwei getrennten, quer zur Längsrichtung der Schienenstraße 2 verlaufenden Achsen 40,42 gelagert und auf diesen Achsen 40,42 verschiebbar geführt sind.

5. Arbeits- und Transportsystem nach einem der Ansprüche 1 bis 4, dadurch ***gekennzeichnet,*** daß an jeder Längsseite des Oberwagens 60 ein zweiarmiger Lenkhebel 64 drehbar gelagert ist, an dessen einem Arm der Unterwagen hängend angelenkt ist und an dessen anderem Arm ein von einer Stellkraft betätigtes Stellglied gelenkig befestigt ist, das den Unterwagen über den Lenkhebel 64 mit einer vorbestimmten Kraft gegen den Oberwagen 60 und damit die Stützräder 58 des Unterwagens gegen die Laufräder 56, 52 des Oberwagens drückt.

6. Arbeits- und Transportsystem nach Anspruch 5, dadurch ***gekennzeichnet,*** daß die Anlenkstelle des Lenkhebels 64 am Unterwagen in der Symmetrieachse des Unterwagens liegt.

7. Arbeits- und Transportsystem nach Anspruch 6, dadurch ***gekennzeichnet,*** daß die Stützräder 58 des Unterwagens symmetrisch zur Symmetrieachse des Unterwagens angeordnet sind.

8. Arbeits- und Transportsystem nach Anspruch 7, dadurch ***gekennzeichnet,*** daß die auf einer Seite der Symmetrieachse des Unterwagens angeordneten Stützräder 58 wahlweise auf einer oder mehreren am Unterwagen angelenkten symmetrischen Schwingen 62 gelagert sind.

9. Arbeits-und Transportsystem nach einem der Ansprüche 1 bis 8, dadurch ***gekennzeichnet,*** daß das den Lenkhebel 64 betätigende Stellglied ein hydraulischer Zylinder 66 ist.

10. Arbeits- und Transportsystem nach einem der Ansprüche 1 bis 9, dadurch ***gekennzeichnet,*** daß am Oberwagen 60 eine Mehrzahl voneinander unabhängigen Unterwagen gemäß den Ansprüchen 5 - 9 angeordnet ist.

11. Arbeits- und Transportsystem nach einem der Ansprüche 1 bis 10 dadurch ***gekennzeichnet,*** daß das größe, alle übrigen Gleiselemente 18 - 24 aufnehmenende Gleiselement 14 um eine vertikale Achse drehbar gelagert ist.

12. Arbeits- und Transportsystem nach einem der Ansprüche 1 bis 11, dadurch ***gekennzeichnet,*** daß das größte Gleiselement 14 auf einer höhenverstellbaren Säule 10 angeordnet ist.

13. Arbeits- und Transportsystem nach einem der Ansprüche 1 bis 12, dadurch ***gekennzeichnet,*** daß das größte Gleiselement 14 mit seiner Lagerung auf einem Fahrzeug 4 angeordnet ist.

14. Arbeits- und Transportsystem nach Anspruch 13, dadurch ***gekennzeichnet,*** daß das Fahrzeug 4 ein selbstfahrendes Fahrzeug ist.
